# DEMANDE DE BREVET EUROPEEN

(11) **EP 3 065 021 A1**
(43) Date de publication de la demande: **07.09.2016**
(21) Numéro de dépôt: 16158173.1
(22) Date de dépôt: 02.03.2016
(51) Int. Cl.: G05D 23/19, F24H 1/20, F24H 9/20

(54) **SYSTÈME DE CHAUFFE-EAU AVEC INSTALLATION PHOTOVOLTAÏQUE DÉDIÉE**

(30) Priorité: 02.03.2015 FR 1551740
(71) Demandeur: Electricité de France, 75008 Paris (FR)
(72) Inventeur: LE BERRE, Rémi, 77250 EPISY (FR); DOUCET, Jean-François, 77940 BLENNES (FR)
(74) Mandataire: Regimbeau

(57) **Abrégé**

L'invention concerne un système (1) comprenant :
- un réservoir d'eau (10) ;
- un dispositif de chauffage (11) de l'eau du réservoir (10), le dispositif (11) comprenant un moyen de chauffage électrique ;
- un module de contrôle (12) dudit dispositif de chauffage (11),
- Une source locale (5) d'énergie renouvelable connectée au module de contrôle (12) via un dispositif de poursuite du point de puissance maximale (4) ;
le module de contrôle (12) alimentant le moyen de chauffage électrique du dispositif de chauffage (11) avec de l'électricité provenant soit d'un réseau électrique global (2), soit de ladite source locale (5) d'énergie renouvelable ;
le système étant caractérisé en ce que le module de contrôle (12) est configuré pour réguler la température dudit réservoir d'eau (10) selon une première consigne de température lorsqu'il alimente le moyen de chauffage électrique avec de l'électricité provenant dudit réseau électrique global (2), et selon une deuxième consigne de température lorsqu'il alimente le moyen de chauffage électrique avec de l'électricité provenant de ladite source locale (5) d'énergie renouvelable, le module de contrôle (12) étant en outre configuré pour modifier la première et/ou la deuxième consigne de température en fonction de données représentatives d'un niveau de production future d'énergie renouvelable par ladite source locale (5).

## Description

### DOMAINE TECHNIQUE GENERAL

La présente invention concerne un système de type chauffe-eau électrique avec installation photovoltaïque dédiée pour produire de l'eau chaude en alternance entre l'énergie d'origine photovoltaïque en courant continu et le réseau électrique alternatif en complément.

### ETAT DE L'ART

Le « mix énergétique » de l'électricité désigne la répartition des différentes sources consommées pour la production d'énergie électrique. Ce mix énergétique, en constante évolution, voit la progression constante des Energies Renouvelables, ce qui entraîne un besoin accru en flexibilités du système électrique.

Les énergies renouvelables, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité de fourniture électrique vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative.

Alternativement au stockage via batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

Cependant, dans le cadre du développement des installations photovoltaïques dans le résidentiel, et avec l'atteinte à moyen terme d'un coût de production du kWh photovoltaïque équivalent ou inférieur au prix de l'électricité résidentielle, il devient plus intéressant pour le particulier d'auto-consommer sa propre électricité d'origine photovoltaïque plutôt que de la réinjecter sur le réseau.

Il a été ainsi proposé des systèmes de chauffe-eau conçus pour consommer la production locale d'énergie renouvelable, en particulier celle de panneaux solaires de toit, via un système de couplage d'alimentation, comme il est par exemple décrit dans la demande US2012/0187106.

Un tel système apporte satisfaction (il permet notamment de limiter les modifications puisqu'il permet d'utiliser le chauffe-eau existant alors que de nombreux systèmes antérieurs nécessitaient une seconde résistance) mais crée de nouveaux problèmes. En effet, outre le fait que la production solaire est intermittente, on constate qu'elle n'est pas identique d'un jour sur l'autre. Cela fait qu'on se retrouve par moments à devoir déconnecter l'installation photovoltaïque alors qu'elle pourrait produire, et par moments à devoir utiliser de l'énergie d'origine non renouvelable issue du réseau électrique global. Ces déconnexions/connexions sont soumises aux températures de consigne pour l'eau chaude Ainsi, l'utilisation optimale de la production d'origine renouvelable n'est pas garantie, et une température de confort pour l'eau chaude non plus.

Il serait souhaitable de disposer d'un pilotage des chauffe-eau qui permette plus efficacement d'absorber l'énergie électrique d'origine renouvelable locale tout en garantissant une température suffisante de l'eau chaude sanitaire pour l'utilisateur, avec un système adaptable à n'importe quel chauffe-eau existant sans modifications lourdes.

### PRESENTATION DE L'INVENTION

L'invention propose de pallier ces inconvénients en proposant selon un premier aspect un système comprenant :
- un réservoir d'eau ;
- un dispositif de chauffage de l'eau du réservoir, le dispositif comprenant un moyen de chauffage électrique ;
- une sonde de température configurée pour émettre un signal représentatif de la température de l'eau du réservoir ;
- un module de contrôle dudit dispositif de chauffage contrôlé en fonction dudit signal émis par la sonde ;
- Une source locale d'énergie renouvelable connectée au module de contrôle via un dispositif de poursuite du point de puissance maximale ;
le module de contrôle étant connecté au réseau électrique global et alimentant le moyen de chauffage électrique du dispositif de chauffage avec de l'électricité provenant soit dudit réseau électrique global, soit de ladite source locale d'énergie renouvelable via le dispositif de poursuite du point de puissance maximale ;
le système étant caractérisé en ce que le module de contrôle est configuré pour réguler la température dudit réservoir d'eau selon une première consigne de température lorsqu'il alimente le moyen de chauffage électrique du dispositif de chauffage avec de l'électricité provenant dudit réseau électrique global, et pour réguler la température dudit réservoir d'eau selon une deuxième consigne de température lorsqu'il alimente le moyen de chauffage électrique du dispositif de chauffage avec de l'électricité provenant de ladite source locale d'énergie renouvelable, le module de contrôle étant en outre configuré pour modifier la première et/ou la deuxième consigne de température en fonction de données représentatives d'un niveau de production future d'énergie renouvelable par ladite source locale.

Le système selon l'invention est avantageusement complété par les caractéristiques suivantes, prises seules ou en une quelconque de leur combinaison techniquement possible :
- le système comprend en outre un boitier recevant lesdites données de données représentatives d'un niveau de production future d'énergie renouvelable par ladite source locale depuis un réseau de communication, le boitier étant connecté audit module de contrôle ;
- le module de contrôle reçoit les valeurs de première et/ou deuxième consignes de température modifiées depuis le réseau de communication ;
- le module de contrôle est configuré pour diminuer la première consigne de température et/ou augmenter la deuxième consigne de température lorsque lesdites données représentatives d'un niveau de production future d'énergie renouvelable par ladite source locale sont caractéristiques d'une production future supérieure à la moyenne ;
- le module de contrôle est configuré pour augmenter la première consigne de température et/ou diminuer la deuxième consigne de température lorsque lesdites données représentatives d'un niveau de production future d'énergie renouvelable par ladite source locale sont caractéristiques d'une production future inférieure à la moyenne ;
- le module de contrôle est configuré pour alimenter pendant au moins une plage horaire quotidienne prédéterminée le moyen de chauffage électrique du dispositif de chauffage avec de l'électricité provenant dudit réseau électrique global ;
- la source locale d'énergie renouvelable est constituée d'au moins un panneau photovoltaïque ;
- le module de contrôle est configuré pour alimenter le moyen de chauffage électrique du dispositif de chauffage avec de l'électricité provenant dudit réseau électrique global pendant la nuit, et avec de l'électricité provenant de ladite source locale d'énergie renouvelable pendant au moins une partie de la journée ;
- les diminution et/ou augmentation des première et/ou deuxième consignes de température sont telles que pendant la journée la température de l'eau du réservoir est toujours entre des seuils minimal et maximal prédéterminés ;
- le module de contrôle est configuré pour déterminer les diminution et/ou augmentation optimales des première et/ou deuxième consignes de température par auto-apprentissage ;
- le module de contrôle est configuré pour alimenter le moyen de chauffage électrique du dispositif de chauffage avec de l'électricité provenant uniquement de ladite source locale d'énergie renouvelable pendant la journée sauf si la température de l'eau du réservoir descend en-dessous dudit seuil minimal prédéterminé, le moyen de chauffage électrique du dispositif de chauffage étant alors alimenté avec de l'électricité provenant dudit réseau électrique global ;
- les données représentatives d'un niveau de production future d'énergie renouvelable par ladite source locale sont des données météorologiques du lendemain ;
- lesdites données caractéristiques d'une production future supérieure à la moyenne sont des données météorologiques caractéristiques d'une journée ensoleillée ;
- lesdites données caractéristiques d'une production future inférieure à la moyenne sont des données météorologiques caractéristiques d'une journée nuageuse.

Selon un deuxième aspect, l'invention concerne un module de contrôle pour un moyen de chauffage électrique d'un dispositif de chauffage d'un réservoir d'eau, adapté pour être connecté d'une part à un réseau électrique global, et d'autre part à une source locale d'énergie renouvelable via un dispositif de poursuite du point de puissance maximale, le module de contrôle étant adapté pour alimenter le moyen de chauffage électrique du dispositif de chauffage avec de l'électricité provenant soit dudit réseau électrique global, soit de ladite source locale d'énergie renouvelable via le dispositif de poursuite du point de puissance maximale ;
le module de contrôle étant caractérisé en ce qu'il est configuré pour :
- recevoir des données représentatives d'un niveau de production future d'énergie renouvelable par ladite source locale ;
- calculer une première et une deuxième consigne de température en fonction des données représentatives d'un niveau de production future d'énergie renouvelable par ladite source locale ; et
- réguler la température dudit réservoir d'eau en fonction d'un signal représentatif de la température de l'eau du réservoir reçu depuis une sonde de température :
   ∘ selon la première consigne de température lorsqu'il alimente le moyen de chauffage électrique du dispositif de chauffage avec de l'électricité provenant dudit réseau électrique global, et
   ∘ selon la deuxième consigne de température lorsqu'il alimente le moyen de chauffage électrique du dispositif de chauffage avec de l'électricité provenant de ladite source locale d'énergie renouvelable.

Selon un troisième aspect, l'invention concerne un procédé de contrôle de la température d'un réservoir d'eau, le procédé étant caractérisé en ce qu'il comprend des étapes de :
(a) Détermination en fonction d'un niveau de production future d'énergie renouvelable par une source locale d'énergie renouvelable d'une première et une deuxième consigne de température ;
(b) Alimentation d'un moyen de chauffage électrique d'un dispositif de chauffage du réservoir d'eau avec de l'électricité provenant soit d'un réseau électrique global, soit d'une source locale d'énergie renouvelable via un dispositif de poursuite du point de puissance maximale ;
(c) Contrôle du moyen de chauffage électrique du dispositif de chauffage par un module de contrôle en fonction d'un signal représentatif de la température de l'eau du réservoir émis par une sonde de température, de sorte à réguler la température dudit réservoir d'eau :
   ∘ selon la première consigne de température lorsqu'il alimente le moyen de chauffage électrique du dispositif de chauffage avec de l'électricité provenant dudit réseau électrique global, et
   ∘ selon la deuxième consigne de température lorsqu'il alimente le moyen de chauffage électrique du dispositif de chauffage avec de l'électricité provenant de ladite source locale d'énergie renouvelable.

Selon des caractéristiques avantageuses :
- l'étape (b) comprend l'alimentation du moyen de chauffage électrique du dispositif de chauffage avec de l'électricité provenant du réseau électrique global pendant au moins une première plage horaire quotidienne prédéterminée, et l'alimentation du moyen de chauffage électrique du dispositif de chauffage avec de l'électricité provenant de la source locale d'énergie renouvelable pendant une deuxième plage horaire quotidienne prédéterminée ;
- l'étape (a) comprend la réception par le module de contrôle de données représentatives dudit niveau de production future d'énergie renouvelable par la source locale d'énergie renouvelable, et la modification desdites première et/ou la deuxième consigne de température en fonction desdites données représentatives du niveau de production future d'énergie renouvelable par ladite source locale.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'un mode de réalisation préféré du système selon l'invention ;
- la figure 2 est un schéma d'un mode de réalisation d'un module de contrôle d'un mode de réalisation préféré du système selon l'invention ;
- les figures 3 et 4 sont des diagrammes illustrant un exemple de fonctionnement du système selon l'invention.

### DESCRIPTION DETAILLEE

### Architecture générale

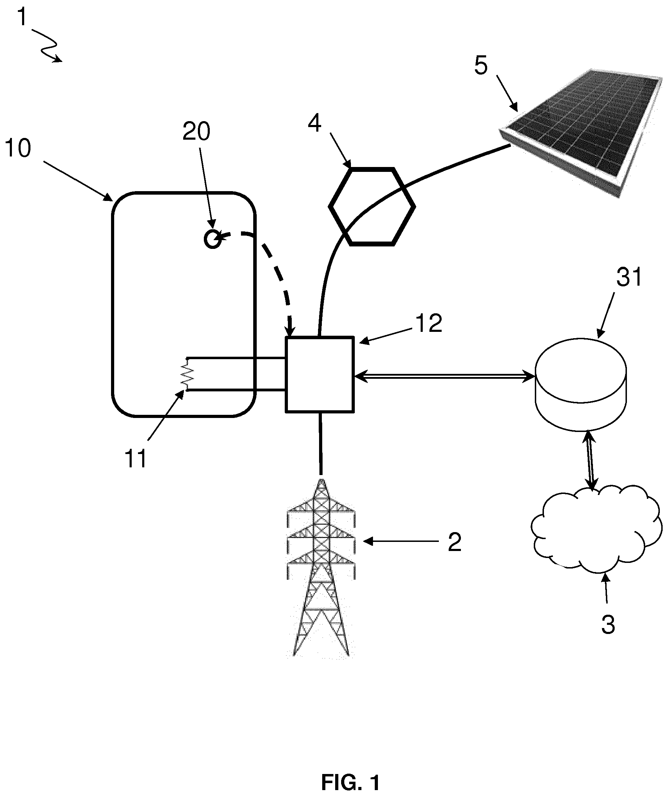

La **figure 1** représente l'architecture générale d'un mode de réalisation préféré du système 1 selon l'invention. Ce système est typiquement construit autour d'un chauffe-eau, en particulier un Chauffe-Eau Joule (CEJ) domestique, bien que l'invention ne soit pas limitée à ces derniers. 44% des habitats sont équipés d'un CEJ. Le système 1 comprend ainsi un chauffe-eau constitué au moins de :
- un réservoir d'eau 10 (communément appelé « ballon » d'eau chaude);
- un dispositif de chauffage 11 de l'eau du réservoir 10, le dispositif 11 comprenant un moyen de chauffage électrique ;
- une sonde de température 20 configurée pour émettre un signal représentatif de la température de l'eau du réservoir 10 ;
- un module de contrôle 12 dudit dispositif de chauffage 11 en fonction dudit signal émis par la sonde 20.

Le moyen de chauffage électrique du dispositif de chauffage est généralement une résistance, d'où le chauffage de l'eau par effet joule. Alternativement, il peut s'agir par exemple d'une pompe à chaleur complète (le chauffe-eau est alors appelé chauffe-eau thermodynamique) dont la source chaude est en échange thermique avec l'eau du réservoir 10 (et la source froide en échange thermique par exemple avec l'air extérieur), de sorte à permettre un chauffage de l'eau avec une efficacité supérieure à 100%. On comprendra que le chauffe-eau n'est ainsi pas nécessairement un CEJ.

Le système 1 comprend en outre une source locale 5 d'énergie renouvelable connectée au module de contrôle 12 via un dispositif de poursuite du point de puissance maximale 4. La source locale 5 d'énergie renouvelable désigne de façon préférée un ou plusieurs panneaux photovoltaïques, présentant ainsi un cycle journalier de production électrique (alternance jour/nuit), mais on comprendra que l'invention n'est pas liée à cette technologie et que la source locale 5 peut comprendre une turbine éolienne. La présente invention trouve tout son intérêt dans le cadre d'une source 5 intermittente. Dans la suite de la présente description, on prendra l'exemple d'une source photovoltaïque.

Le dispositif de poursuite du point de puissance maximale 4, ou tracker MPP, ou seulement MPPT (« Maximum power point tracker »), est un type connu de convertisseur continu/continu permettant de suivre, comme son nom l'indique, le point de puissance maximale d'un générateur électrique non linéaire, ce qui est typiquement le cas avec les générateurs photovoltaïques ou éoliens. Par exemple, en photovoltaïque, la courbe caractéristique I=f(U) ressemble au quart positif d'une ellipse. En conséquence, pour un même éclairement, la puissance délivrée sera différente selon la tension. Le MPPT 4 pilote donc sa tension de sortie de manière à fournir en permanence le maximum de puissance à la charge. Classiquement, cela se fait en analysant la puissance de sortie P, (ou l'intensité de sortie /), l'objectif est de maximiser P, en augmentant au maximum la tension U sans faire baisser l'intensité /.

Le module de contrôle 12 est connecté au réseau électrique global 2 et alimente le dispositif de chauffage 11 avec de l'électricité provenant soit dudit réseau électrique global 2, soit de ladite source locale 5 d'énergie renouvelable via le dispositif de poursuite du point de puissance maximale 4. En d'autres termes, le module de contrôle 12 agit comme un « switch » configuré pour basculer l'alimentation du moyen électrique du dispositif de chauffage 11 selon des conditions qui seront décrites plus loin. On note que le MPPT 4 peut être intégré à la source locale 5 ou directement au module de contrôle 12. Un tel montage est décrit dans la demande US2012/0187106.

On note que le module de contrôle 12 lui-même est alimenté par le réseau global 2.

De façon préférée, le dispositif 11 est intégralement électrique (il ne comprend ainsi que des moyens de chauffage alimentés par un réseau électrique 2 ou la source locale 5, et pas de bruleurs à gaz par exemple). L'énergie de chauffage fournie à l'eau est alors entièrement d'origine électrique. Le système n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

Le réseau 2 est un réseau « global » à grande échelle qui relie une pluralité de sources électriques, en particulier le réseau électrique national. Il peut s'agir à la fois d'énergie d'origine non-renouvelable (nucléaire et/ou fossile) et d'origine renouvelable (solaire, éolien, etc.).

Le système 1 est régulé en température. Pour cela, outre le module de contrôle 12 du dispositif de chauffage 11, il comprend une ou plusieurs sondes de température 20. La ou les sondes 20 envoient en permanence ou par intermittence un signal représentatif de la température de l'eau du réservoir 10. Ce signal peut être un envoi de données représentant numériquement la température, ou un signal électrique dont un paramètre est fonction de la température.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.). Le présent module de contrôle 12 est de façon préférée une carte « universelle », c'est-à-dire qu'elle peut venir se substituer à une carte de régulation d'origine de tout type et de toute marque de chauffe-eau (encombrement permettant une installation en conservant le capot de protection d'origine).

### Température de consigne

De façon générale, le module de contrôle d'un chauffe-eau classique est configuré pour réguler la température du réservoir d'eau selon une consigne de température, i.e. une température cible « de confort », qui est la température moyenne souhaitée, réglée par l'utilisateur (l'intervalle 50-65°C est courant), et dont la valeur peut varier selon le moment et des réglages personnels.

Plus précisément, la température de consigne définit le plus souvent deux températures de seuil : une première température de seuil qui est la température « minimale » et une deuxième température de seuil qui est la température « maximale » (le premier seuil est inférieur au deuxième seuil). Ces deux seuils sont quelques degrés autour (par exemple +/- 3°C) de la température de consigne.

En pratique, les seuils minimal et maximal sont souvent la conséquence implicite d'un phénomène d'hystérésis autour de la valeur de température de consigne, mais ils peuvent être explicitement gérés.

Le module de contrôle 12 est ainsi configuré pour activer le dispositif de chauffage 11 lorsque le signal reçu est représentatif d'une température inférieure au seuil minimal, et/ou pour désactiver le dispositif de chauffage 11 lorsque le signal reçu est représentatif d'une température supérieure au seuil maximal.

Ainsi, tant que le dispositif de chauffage 11 est arrêté et que l'on est entre les deux seuils (i.e. l'écart avec la température de consigne est inférieur à un écart prédéfini) rien ne se passe. Si la température baisse (avec le temps ou parce que l'utilisateur tire de l'eau chaude) et passe en dessous du seuil minimal, le dispositif de chauffage 11 est activité, et ce jusqu'à atteindre le seuil maximal. La température se remet ensuite à baisser, etc. En d'autres termes il y a une alternance de phases de « refroidissement » pendant lesquelles la température descend du seuil maximal au seuil minimal (voir au-delà si l'utilisateur continue d'utiliser de l'eau chaude), et de phases de « chauffe » pendant lesquelles la température monte sous l'effet du dispositif 11 allumé d'une température inférieure ou égale au seuil minimal jusqu'au seuil maximal.

La présente invention n'est limitée à aucune configuration en particulier, en on comprendra que de façon générale le module de contrôle 12 régule la température du réservoir 10 autour d'une température de consigne via l'activation/désactivation du dispositif de chauffage 11 en fonction de la température de l'eau du réservoir 10 représentée par le signal issu de la sonde 20.

Le présent système 1 utilise au moins deux températures de consigne en alternance selon un motif prédéterminé.

Plus précisément, le module de contrôle 12 est configuré pour réguler la température dudit réservoir d'eau 10 selon une première consigne de température lorsqu'il alimente le moyen de chauffage électrique 11 avec de l'électricité provenant dudit réseau électrique global 2, et pour réguler la température dudit réservoir d'eau 10 selon une deuxième consigne de température lorsqu'il alimente le moyen de chauffage électrique 11 avec de l'électricité provenant de ladite source locale 5 d'énergie renouvelable.

La première consigne de température est de base typiquement plus faible que la deuxième consigne de température (par exemple 55 contre 65°C) de sorte à favoriser la consommation d'énergie ayant pour origine la source locale 5.

Le module de contrôle 12 est configuré pour alimenter pendant au moins une plage horaire quotidienne prédéterminée le moyen de chauffage électrique du dispositif de chauffage 11 avec de l'électricité provenant dudit réseau électrique global 2. Cette plage prédéterminée correspond à un intervalle de temps pendant lequel la source locale 5 ne produit pas, par exemple la nuit pour un panneau photovoltaïque, ou pour une éolienne.

Dans le cas d'un panneau photovoltaïque, le module de contrôle 12 est configuré pour alimenter le moyen de chauffage électrique du dispositif de chauffage 11 avec de l'électricité provenant dudit réseau électrique global 2 pendant la nuit, et avec de l'électricité provenant de ladite source locale 5 d'énergie renouvelable pendant au moins une partie de la journée, avantageusement toute la journée.

Plus précisément, le module de contrôle 12 est configuré pour alimenter le moyen de chauffage électrique du dispositif de chauffage 11 avec de l'électricité provenant uniquement de ladite source locale 5 d'énergie renouvelable pendant la journée sauf si la température de l'eau du réservoir 10 descend en-dessous d'un seuil minimal prédéterminé (correspondant à un seuil de confort, éventuellement fonction de la première température de consigne, en dessous duquel l'eau est jugée trop froide pour un utilisateur), le moyen de chauffage électrique du dispositif de chauffage 11 étant alors alimenté avec de l'électricité provenant dudit réseau électrique global 2. L'idée est qu'une mauvaise production photovoltaïque ne condamne pas les utilisateurs à une eau trop froide.

De façon générale, on comprendra que dans la mesure du possible le module de contrôle 12 est configuré pour :
- la nuit, réguler la température de l'eau du réservoir 10 autour de la première consigne température en utilisant l'électricité provenant dudit réseau électrique global 2 (faute d'énergie photovoltaïque) ; et
- la journée, réguler la température de l'eau du réservoir 10 autour de la deuxième consigne température en utilisant (dans la mesure du possible uniquement) l'électricité provenant de ladite source locale 5 d'énergie photovoltaïque.

On note que par « journée » et « nuit » on entend deux plages complémentaires correspondant plus ou moins (mais pas forcément exactement) aux plages ou le soleil est levé/couché. En particulier, ces plages peuvent varier sur l'année ou être fixes. On prendra par exemple l'exemple dans lequel on définit par « journée » la plage 6h-22h et par « nuit » la plage 22h-6h.

Pour limiter les pertes thermiques de l'enveloppe du réservoir 10 (pertes totales quotidiennes de l'ordre de 25% de l'énergie de chauffage de l'eau), le module de contrôle 12 peut permettre un décalage du chauffage de l'eau avec de l'électricité en provenance du réseau électrique 2 à la fin de nuit en limitant le fonctionnement à partir du réseau électrique 2 à une plage horaire 3h-6h (par exemple).

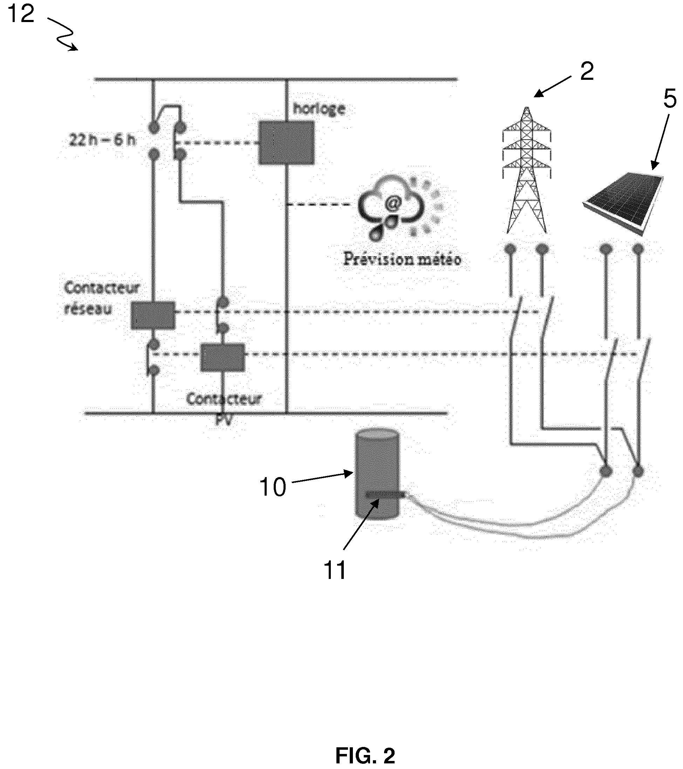

La **figure 2** représente un exemple de montage électronique simple permettant au module de contrôle 12 de mettre en oeuvre les deux consignes de température en alternance. Une horloge entraîne aux heures prédéterminées (ici 6h et 22h) le basculement d'un interrupteur commandant l'un ou l'autre de deux contacteurs :
- le premier active l'alimentation via le réseau électrique 2 ;
- le second active alimentation électrique via la source locale 5.

### Consignes mobiles

Les deux consignes de température utilisées se distinguent en outre en ce qu'elles sont mobiles. En particulier, dans la mesure où la production de la source locale n'est pas constante, on risque d'avoir trop d'énergie photovoltaïques certaines journées (et donc des pertes potentielles de production photovoltaïque), et pas assez d'autres.

Pour résoudre cette difficulté, la première et/ou la deuxième consigne de température sont modifiées en fonction de données représentatives d'un niveau de production future d'énergie renouvelable par ladite source locale 5, de sorte à absorber au maximum l'énergie d'origine renouvelable et limiter les pertes de production photovoltaïque tout en assurant une température d'eau chaude confortable à tout instant.

L'idée est de diminuer la première consigne de température et/ou d'augmenter la deuxième consigne de température lorsque lesdites données représentatives d'un niveau de production future d'énergie renouvelable par ladite source locale 5 sont caractéristiques d'une production future supérieure à la moyenne, et d'augmenter la première consigne de température et/ou diminuer la deuxième consigne de température lorsque lesdites données représentatives d'un niveau de production future d'énergie renouvelable par ladite source locale 5 sont caractéristiques d'une production future inférieure à la moyenne.

En effet la hausse (respectivement la baisse) d'une consigne de température entraîne une hausse (respectivement une baisse) de la consommation d'électricité associée. Dans la mesure où il y une consigne associée à chaque moyen d'alimentation cela permet de piloter séparément la consommation d'énergie locale renouvelable et celle issue du réseau global 2 et de les utiliser de façon optimale.

De façon préférée il n'y a jamais de baisse de la seconde consigne de température de sorte à éventuellement augmenter, mais jamais baisser, la consommation d'énergie renouvelable. On note que la seconde consigne de température peut avoir même une valeur constante égale à une valeur maximum, seule la première consigne variant.

Les données représentatives d'un niveau de production future d'énergie renouvelable par ladite source locale 5 désignent de façon générale toutes les informations sur la charge future de la source 5.

Ces données peuvent être des données génériques obtenues localement, par exemple météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) via un boitier 31, en particulier en temps réel.

Dans un premier mode de réalisation, le boitier 31 est un module électronique de communication pouvant échanger des données avec un serveur Internet. Dans un deuxième mode de réalisation, le boitier 31 est un compteur électrique intelligent (par exemple LINKY) disposant d'un émetteur Télé-Information Client (TIC) intégré ou non. Dans un troisième mode de réalisation préféré, le boitier 31 est un équipement d'accès à internet de type « box » d'un fournisseur d'accès à Internet. Le boitier 31 est connecté au module de contrôle 12 par des moyens de connexion réseau tels que le Wi-Fi, une liaison Ethernet, le CPL, etc. les données peuvent être alors des données météorologiques complètes (vitesse du vent, ensoleillement, température extérieure, etc.), des données pré-traitées sur des serveurs d'un fournisseur d'électricité, etc.

La présente invention n'est ni limitée à un type de données représentatives d'un niveau de production future d'énergie renouvelable par ladite source locale 5, ni à une manière de fournir ces données, mais de façon préférée ce sont simplement des données météorologiques du lendemain, en particulier des données relatives à l'ensoleillement pour une source locale 5 photovoltaïque.

Ainsi, lesdites données caractéristiques d'une production future supérieure à la moyenne sont des données météorologiques caractéristiques d'une journée ensoleillée, et lesdites données caractéristiques d'une production future inférieure à la moyenne sont des données météorologiques caractéristiques d'une journée nuageuse.

On notera que par « ensoleillée » et « nuageuse », on entendra d'un ensoleillement supérieur/inférieur à la moyenne, i.e. associé à une production supérieure/inférieure d'énergie photovoltaïque. Alternativement, les données météorologiques ne sont pas binaires et sont au contraire par exemple représentatives d'un nombre d'heures d'ensoleillement ou directement d'une quantité d'énergie estimée qui sera produite par unité de surface de panneau photovoltaïque. Cette seconde solution ouvre la voie à un calcul optimisé (et personnalisé journée par journée des augmentation/diminution des première et/ou deuxième consignes de température).

En résumé, un mode de réalisation particulièrement préféré dans le cas d'une source 5 photovoltaïque (illustré en particulier par la figure 1), le présent système 1 comprend :
- un réservoir d'eau 10 ;
- un dispositif de chauffage 11 de l'eau du réservoir 10, le dispositif 11 comprenant un moyen de chauffage électrique ;
- une sonde de température 20 configurée pour émettre un signal représentatif de la température de l'eau du réservoir 10 ;
- un module de contrôle 12 dudit dispositif de chauffage 11 contrôlé en fonction dudit signal émis par la sonde 20 ;
- Une source locale 5 d'énergie photovoltaïque connectée au module de contrôle 12 via un dispositif de poursuite du point de puissance maximale 4 ;
le module de contrôle 12 étant connecté au réseau électrique global 2 et alimentant le moyen de chauffage électrique du dispositif de chauffage 11 avec de l'électricité provenant :
- dudit réseau électrique global 2 (au moins) pendant la nuit, et
- de ladite source locale 5 d'énergie renouvelable via le dispositif de poursuite du point de puissance maximale 4 pendant (si possible toute) la journée ;
le module de contrôle 12 étant configuré pour réguler la température dudit réservoir d'eau 10 selon une première consigne de température lorsqu'il alimente le moyen de chauffage électrique du dispositif de chauffage 11 avec de l'électricité provenant dudit réseau électrique global 2, et pour réguler la température dudit réservoir d'eau 10 selon une deuxième consigne de température lorsqu'il alimente le moyen de chauffage électrique du dispositif de chauffage 11 avec de l'électricité provenant de ladite source locale 5 d'énergie photovoltaïque, le module de contrôle 12 étant en outre configuré pour modifier la première et/ou la deuxième consigne de température en fonction de données météorologiques de la journée du lendemain, de sorte à absorber au maximum l'énergie d'origine renouvelable et limiter les pertes de production photovoltaïque tout en assurant une température d'eau chaude confortable à tout instant.

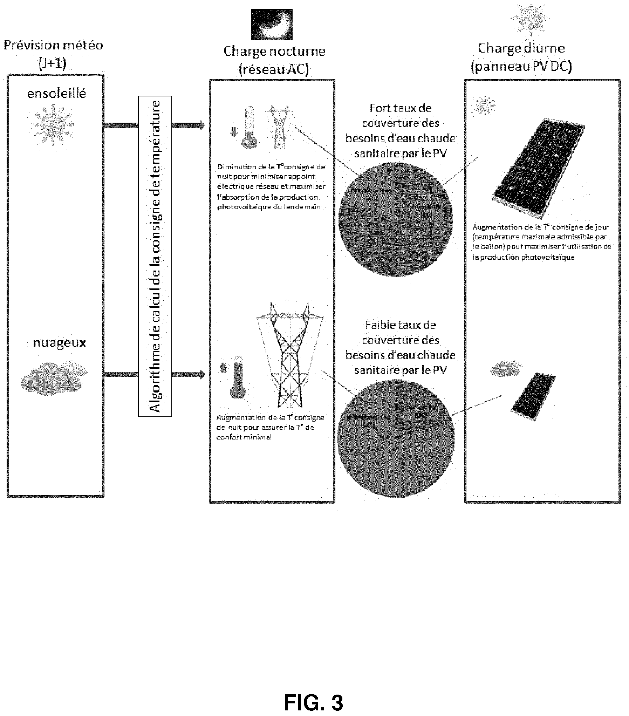

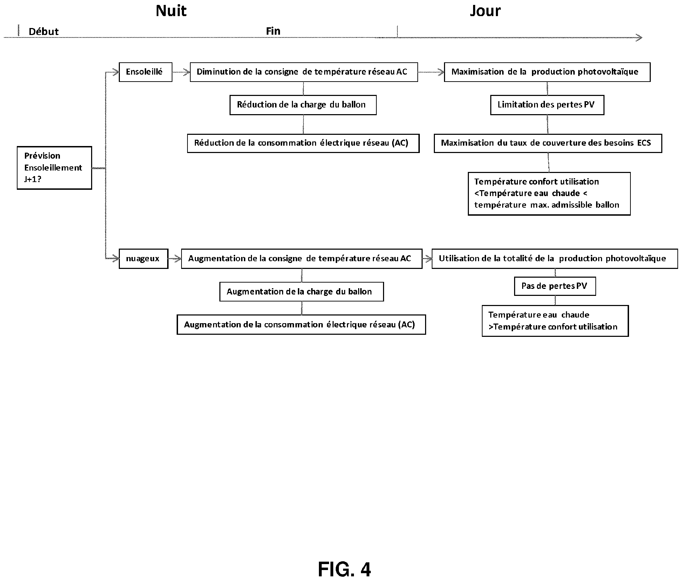

En référence à la **figure 3** et plus particulièrement à la **figure 4****,** le module de contrôle 12 est préférentiellement configuré pour diminuer la première consigne de température et augmenter la deuxième consigne de température lorsque les données météorologiques descriptives de la journée du lendemain sont caractéristiques d'une journée ensoleillée, et pour augmenter la première consigne de température lorsque les données météorologiques descriptives de la journée du lendemain sont caractéristiques d'une journée nuageuse.

Dans le cas d'une journée du lendemain ensoleillée :
- comme la première consigne de température est abaissée, durant la nuit la capacité énergétique du réservoir 10 est diminuée et la consommation d'électricité du réseau 2 diminue ;
- Ainsi, comme l'eau est plus froide au matin, l'énergie stockée sous forme de chaleur dans le réservoir 10 est plus faible que d'habitude ;
- Comme la deuxième consigne de température est augmentée, la capacité énergétique du réservoir 10 est également augmentée. Du fait de la combinaison entre cette forte capacité et la quantité d'énergie faible actuellement stockée, le chauffe-eau va pouvoir recevoir une grande quantité d'énergie photovoltaïque, ce qui sera le cas au vu du temps ensoleillé (surproduction). Toute cette production (sinon la majeure partie) sera absorbée et la quantité d'énergie photovoltaïque potentiellement perdue sera nulle ou minimale.

Dans le cas d'une journée du lendemain nuageuse :
- comme la première consigne de température est augmentée, durant la nuit la capacité énergétique du réservoir 10 est augmentée et la consommation d'électricité du réseau 2 augmente. Cela permet d'anticiper la faible production future d'énergie photovoltaïque, tout en consommant l'électricité du réseau en heures creuses, là où elle est le moins cher ;
- Ainsi, comme l'eau est plus chaude au matin, l'énergie stockée sous forme de chaleur dans le réservoir 10 est plus élevée que d'habitude ;
- Du fait de la quantité d'énergie forte actuellement stockée, le chauffe-eau ne requerra qu'une quantité faible d'énergie photovoltaïque, ce qui sera le cas au vu du temps nuageux (sous-production). On note qu'abaisser la deuxième consigne de température n'est pas souhaitable car cela risquerait de limiter la consommation d'énergie photovoltaïque alors que l'objectif est d'en consommer 100%. Il est préférable de monter suffisamment la première consigne de sorte à avoir suffisamment d'eau chaude d'avance pour ne pas avoir à utiliser en journée l'électricité du réseau 2.

De façon préférée, la diminution et/ou l'augmentation d'une consigne de température est de l'ordre d'une dizaine de degrés. Il est souhaitable que ces diminution et/ou augmentation des première et/ou deuxième consignes de température soient telles que pendant la journée la température de l'eau du réservoir 10 est toujours entre des seuils minimal et maximal prédéterminés.

En particulier, le seuil minimal, évoqué précédemment est un seuil de confort, par exemple 45°C. Le seuil maximal correspond à une limite physique du réservoir 10, limite qui peut prendre en considération des risques de brulures. Il est par exemple de 85°C (à cet effet un mitigeur peut être disposé en sortie du réservoir pour limiter les risques de brûlures).

On note que le module de contrôle 12 peut disposer de valeurs saisonnières « de base » des consignes de température, et leur appliquer une hausse ou une baisse soit prédéterminée, soit dynamique (et fonction des données reçues).

La table 1 ci-dessous donne des exemples de premières et deuxièmes consignes de température selon les données météorologiques.

**Table 1**

| | Première consigne de température | Deuxième consigne de température |
|---|---|---|
| Valeur de base | 55°C | 65°C |
| Journée ensoleillée | 45°C | 75°C |
| Journée nuageuse | 65°C | 65°C |

### Calcul des valeurs de consigne

Comme expliqué, le système 1 comprend avantageusement un boitier 31 recevant lesdites données représentatives d'un niveau de production future d'énergie renouvelable par ladite source locale 5 depuis un réseau de communication 3, le boitier 31 étant connecté audit module de contrôle 12.

Dans un premier mode de réalisation basique, le module 12 reçoit des données brutes, qu'il classifie en « ensoleillé » ou « nuageux », et applique en conséquence des coefficients prédéterminés d'augmentation ou de baisse des consignes de température.

De façon préférée, un algorithme mis en oeuvre par le module de contrôle 12 traduit la prévision météorologique en consignes de température de sorte à optimiser au mieux les consommations du lendemain (l'objectif étant de consommer sur la journée toute la production photovoltaïque et juste cette production photovoltaïque, tout en respectant les seuils minimal et maximal de température pour garantir le confort de l'utilisateur).

De façon préférée, le module de contrôle 12 est configuré pour déterminer les diminution et/ou augmentation optimales des première et/ou deuxième consignes de température par auto-apprentissage. Ainsi, pour une journée particulière, le module 12 (par exemple relié au compteur) détecte l'importance de la consommation électrique en provenance du réseau 2 comparativement à la prévision à J+1 (la journée du lendemain), et modifie en conséquence les variables de l'algorithme traduisant la prévision météorologique en consignes de température.

On note que selon un mode alternatif, l'intelligence peut être délocalisée vers un serveur du réseau 3, ce serveur calculant les consignes modifiées (ou les diminutions/augmentation) et les transmettant au module de contrôle 12, qui se contente de les appliquer.

Selon encore un mode alternatif, le module de contrôle 12 peut être intégré à une carte électronique ou à un compteur intelligent (ou disposé à proximité immédiate de ce compteur) qui met en oeuvre le prétraitement des données météorologiques.

Dans un cas où le module 12 ne recevrait aucune donnée météorologique (le cas échéant aucune consigne modifiée), par exemple à cause d'un échec de connexion au réseau 3, de façon préférée le module de contrôle utilise les valeurs de base (non modifiées) des première et deuxième consignes.

Selon un deuxième aspect, l'invention concerne un module de contrôle 12 adapté pour un chauffe-eau existant (i.e. un ensemble réservoir 10, dispositif de chauffage 11 et sonde 20).

Comme expliqué, il suffit de retirer le précédent module 12 et le nouveau utilise en l'état le moyen de chauffe électrique du dispositif 11 présent sans modifications substantielles.

Comme expliqué, le présent module de contrôle 12 est connecté d'une part à un réseau électrique global 2, et d'autre part à une source locale 5 d'énergie renouvelable via un dispositif de poursuite du point de puissance maximale 4, le module de contrôle 12 alimentant le moyen de chauffage électrique du dispositif de chauffage 11 avec de l'électricité provenant soit dudit réseau électrique global 2, soit de ladite source locale 5 d'énergie renouvelable via le dispositif de poursuite du point de puissance maximale 4.

Le présent module de contrôle est en outre configuré pour :
- recevoir des données représentatives d'un niveau de production future d'énergie renouvelable par ladite source locale 5 ;
- calculer une première et une deuxième consigne de température en fonction des données représentatives d'un niveau de production future d'énergie renouvelable par ladite source locale 5 ; et
- réguler la température dudit réservoir d'eau 10 en fonction d'un signal représentatif de la température de l'eau du réservoir 10 reçu depuis une sonde de température 20 :
   ∘ selon la première consigne de température lorsqu'il alimente le moyen de chauffage électrique du dispositif de chauffage 11 avec de l'électricité provenant dudit réseau électrique global 2 (en particulier la nuit), et
   ∘ selon la deuxième consigne de température lorsqu'il alimente le moyen de chauffage électrique du dispositif de chauffage 11 avec de l'électricité provenant de ladite source locale 5 d'énergie renouvelable (en particulier la journée).

### Procédé

Selon un troisième aspect, l'invention concerne également un procédé de contrôle de la température d'un réservoir d'eau 10 mis en oeuvre par le système 1 selon le premier aspect de l'invention.

Le procédé commence par une étape (a) de détermination en fonction d'un niveau de production future d'énergie renouvelable par une source locale 5 d'énergie renouvelable (en particulier photovoltaïque) d'une première et une deuxième consigne de température.

De façon préférée le module de contrôle 12 reçoit comme expliqué des données représentatives dudit niveau de production future d'énergie renouvelable par la source locale 5 d'énergie renouvelable (typiquement des données météorologique de la journée du lendemain), et modifie des valeurs de base des première et/ou la deuxième consigne de température en fonction desdites données, en particulier soit en diminuant la première consigne de température et/ou augmentant la deuxième consigne de température lorsque lesdites données représentatives d'un niveau de production future d'énergie renouvelable par ladite source locale 5 sont caractéristiques d'une production future supérieure à la moyenne (journée ensoleillée), soit en augmentant la première consigne de température et/ou diminuant la deuxième consigne de température lorsque lesdites données représentatives d'un niveau de production future d'énergie renouvelable par ladite source locale 5 sont caractéristiques d'une production future inférieure à la moyenne (journée nuageuse).

Dans une deuxième étape (b), le module de contrôle 12 alimente un moyen de chauffage électrique d'un dispositif de chauffage 11 du réservoir d'eau 10 avec de l'électricité provenant soit d'un réseau électrique global 2, soit d'une source locale 5 d'énergie renouvelable via un dispositif de poursuite du point de puissance maximale 4. Par « alimenter », on entend que le module 12 connecte le moyen de chauffe électrique à une source, mais ne l'utilise pas forcément. Alimenter n'implique pas nécessairement que le moyen de chauffe consomme de l'électricité. Il s'agit d'une étape de basculement d'un contact électrique.

En particulier, l'alimentation du moyen de chauffage électrique du dispositif de chauffage 11 avec de l'électricité provenant du réseau électrique global 2 est pendant au moins une première plage horaire quotidienne prédéterminée (en particulier la nuit), et l'alimentation du moyen de chauffage électrique du dispositif de chauffage 11 avec de l'électricité provenant de la source locale 5 d'énergie renouvelable est pendant une deuxième plage horaire quotidienne prédéterminée (typiquement la journée).

Dans une troisième étape (c), le module de contrôle 12 contrôle le moyen de chauffage électrique du dispositif de chauffage 11 en fonction d'un signal représentatif de la température de l'eau du réservoir 10 émis par une sonde de température 20, de sorte à réguler la température dudit réservoir d'eau 10 :
∘ selon la première consigne de température lorsqu'il alimente le moyen de chauffage électrique du dispositif de chauffage 11 avec de l'électricité provenant dudit réseau électrique global 2, et
∘ selon la deuxième consigne de température lorsqu'il alimente le moyen de chauffage électrique du dispositif de chauffage 11 avec de l'électricité provenant de ladite source locale 5 d'énergie renouvelable.

## Revendications

1. Système (1) comprenant :
- un réservoir d'eau (10) ;
- un dispositif de chauffage (11) de l'eau du réservoir (10), le dispositif (11) comprenant un moyen de chauffage électrique ;
- une sonde de température (20) configurée pour émettre un signal représentatif de la température de l'eau du réservoir (10) ;
- un module de contrôle (12) dudit dispositif de chauffage (11) contrôlé en fonction dudit signal émis par la sonde (20) ;
- Une source locale (5) d'énergie renouvelable connectée au module de contrôle (12) via un dispositif de poursuite du point de puissance maximale (4) ;
le module de contrôle (12) étant connecté au réseau électrique global (2) et alimentant le moyen de chauffage électrique du dispositif de chauffage (11) avec de l'électricité provenant soit dudit réseau électrique global (2), soit de ladite source locale (5) d'énergie renouvelable via le dispositif de poursuite du point de puissance maximale (4) ;
le système étant **caractérisé en ce que** le module de contrôle (12) est configuré pour réguler la température dudit réservoir d'eau (10) selon une première consigne de température lorsqu'il alimente le moyen de chauffage électrique du dispositif de chauffage (11) avec de l'électricité provenant dudit réseau électrique global (2), et pour réguler la température dudit réservoir d'eau (10) selon une deuxième consigne de température lorsqu'il alimente le moyen de chauffage électrique du dispositif de chauffage (11) avec de l'électricité provenant de ladite source locale (5) d'énergie renouvelable, le module de contrôle (12) étant en outre configuré pour modifier la première et/ou la deuxième consigne de température en fonction de données représentatives d'un niveau de production future d'énergie renouvelable par ladite source locale (5).

2. Système selon la revendication 1, comprenant en outre un boitier (31) recevant lesdites données de données représentatives d'un niveau de production future d'énergie renouvelable par ladite source locale (5) depuis un réseau de communication (3), le boitier (31) étant connecté audit module de contrôle (12).

3. Système selon la revendication 2, dans lequel le module de contrôle (12) reçoit les valeurs de première et/ou deuxième consignes de température modifiées depuis le réseau de communication (3).

4. Système selon l'une des revendications 1 à 3, dans lequel le module de contrôle (12) est configuré pour diminuer la première consigne de température et/ou augmenter la deuxième consigne de température lorsque lesdites données représentatives d'un niveau de production future d'énergie renouvelable par ladite source locale (5) sont caractéristiques d'une production future supérieure à la moyenne.

5. Système selon l'une des revendications 1 à 4, dans lequel le module de contrôle (12) est configuré pour augmenter la première consigne de température et/ou diminuer la deuxième consigne de température lorsque lesdites données représentatives d'un niveau de production future d'énergie renouvelable par ladite source locale (5) sont caractéristiques d'une production future inférieure à la moyenne.

6. Système selon l'une des revendications 1 à 5, dans lequel le module de contrôle (12) est configuré pour alimenter pendant au moins une plage horaire quotidienne prédéterminée le moyen de chauffage électrique du dispositif de chauffage (11) avec de l'électricité provenant dudit réseau électrique global (2).

7. Système selon l'une des revendications 1 à 6, dans lequel la source locale (5) d'énergie renouvelable est constituée d'au moins un panneau photovoltaïque.

8. Système selon les revendications 6 et 7 en combinaison, dans lequel le module de contrôle (12) est configuré pour alimenter le moyen de chauffage électrique du dispositif de chauffage (11) avec de l'électricité provenant dudit réseau électrique global (2) pendant la nuit, et avec de l'électricité provenant de ladite source locale (5) d'énergie renouvelable pendant au moins une partie de la journée.

9. Système selon la revendication 8, dans lequel les diminution et/ou augmentation des première et/ou deuxième consignes de température sont telles que pendant la journée la température de l'eau du réservoir (10) est toujours entre des seuils minimal et maximal prédéterminés.

10. Système selon la revendication 9, dans lequel le module de contrôle (12) est configuré pour alimenter le moyen de chauffage électrique du dispositif de chauffage (11) avec de l'électricité provenant uniquement de ladite source locale (5) d'énergie renouvelable pendant la journée sauf si la température de l'eau du réservoir (10) descend en-dessous dudit seuil minimal prédéterminé, le moyen de chauffage électrique du dispositif de chauffage (11) étant alors alimenté avec de l'électricité provenant dudit réseau électrique global (2).

11. Système selon l'une des revendications 7 à 10, dans lequel les données représentatives d'un niveau de production future d'énergie renouvelable par ladite source locale (5) sont des données météorologiques du lendemain.

12. Système selon les revendications 4 et 11 en combinaison, dans lequel lesdites données caractéristiques d'une production future supérieure à la moyenne sont des données météorologiques caractéristiques d'une journée ensoleillée.

13. Système selon les revendications 5 et 11 en combinaison, dans lequel lesdites données caractéristiques d'une production future inférieure à la moyenne sont des données météorologiques caractéristiques d'une journée nuageuse.

14. Module de contrôle (12) d'un moyen de chauffage électrique pour un dispositif de chauffage (11) d'un réservoir d'eau (10), adapté pour être connecté d'une part à un réseau électrique global (2), et d'autre part à une source locale (5) d'énergie renouvelable via un dispositif de poursuite du point de puissance maximale (4), le module de contrôle (12) étant adapté pour alimenter le moyen de chauffage électrique du dispositif de chauffage (11) avec de l'électricité provenant soit dudit réseau électrique global (2), soit de ladite source locale (5) d'énergie renouvelable via le dispositif de poursuite du point de puissance maximale (4) ;
le module de contrôle (12) étant **caractérisé en ce qu'**il est configuré pour :
- recevoir des données représentatives d'un niveau de production future d'énergie renouvelable par ladite source locale (5) ;
- calculer une première et une deuxième consigne de température en fonction des données représentatives d'un niveau de production future d'énergie renouvelable par ladite source locale (5) ; et
- réguler la température dudit réservoir d'eau (10) en fonction d'un signal représentatif de la température de l'eau du réservoir (10) reçu depuis une sonde de température (20) :
∘ selon la première consigne de température lorsqu'il alimente le moyen de chauffage électrique du dispositif de chauffage (11) avec de l'électricité provenant dudit réseau électrique global (2), et
∘ selon la deuxième consigne de température lorsqu'il alimente le moyen de chauffage électrique du dispositif de chauffage (11) avec de l'électricité provenant de ladite source locale (5) d'énergie renouvelable.

15. Procédé de contrôle de la température d'un réservoir d'eau (10), le procédé étant **caractérisé en ce qu'**il comprend des étapes de :
(a) Détermination en fonction d'un niveau de production future d'énergie renouvelable par une source locale (5) d'énergie renouvelable d'une première et une deuxième consigne de température ;
(b) Alimentation d'un moyen de chauffage électrique d'un dispositif de chauffage (11) du réservoir d'eau (10) avec de l'électricité provenant soit d'un réseau électrique global (2), soit d'une source locale (5) d'énergie renouvelable via un dispositif de poursuite du point de puissance maximale (4) ;
(c) Contrôle du moyen de chauffage électrique du dispositif de chauffage (11) par un module de contrôle (12) en fonction d'un signal représentatif de la température de l'eau du réservoir (10) émis par une sonde de température (20), de sorte à réguler la température dudit réservoir d'eau (10) :
∘ selon la première consigne de température lorsqu'il alimente le moyen de chauffage électrique du dispositif de chauffage (11) avec de l'électricité provenant dudit réseau électrique global (2), et
∘ selon la deuxième consigne de température lorsqu'il alimente le moyen de chauffage électrique du dispositif de chauffage (11) avec de l'électricité provenant de ladite source locale (5) d'énergie renouvelable.
